# EUROPEAN PATENT APPLICATION

(11) **EP 0 756 408 A2**
(43) Date of publication of application: **29.01.1997**
(21) Application number: 96305473.9
(22) Date of filing: 25.07.1996
(51) Int. Cl.: H04M 1/274

(54) **Card type automatic dialing device**

(30) Priority: 28.07.1995 JP 193281/95; 14.12.1995 JP 325972/95
(71) Applicant: EMPIRE AIRPORT SERVICE CO., LTD., Tokyo-To (JP)
(72) Inventor: Horiuchi, Mikio, c/o Empire Airport Serv. Co Ltd, Tokyo-To (JP); Kondo, Ryosuke, c/o Empire Airport Serv. Co Ltd, Tokyo-To (JP)
(74) Representative: Palmer, Roger

(57) **Abstract**

A card type automatic dialing device comprises a memory in which at least one predetermined number including ID number relating to payment of calling fee, a switch responsive to operation to form a signal for reading out any predetermined number in the memory, an address circuit responsive to a signal from the switch to deliver an address signal to the memory, a read-out circuit responsive to the address signal from the address circuit to carry out bit error detection of number data read out from the memory, whereby when there is no error, it outputs the number data thus read out, while when there is any error, it allows the memory to carry out read-out operation therefrom for a second time, circuit elements supplied with a number output signal from the read-out circuit to output sound for sound-inputting to a telephone, and a casing formed so as to take a card shape and adapted for accommodating the respective elements. Further, this automatic dialing device may have a function to supplementarily effect payment of the credit card system in addition to the prepaid system. To realize this, a detachable externally attached memory in which credit number is stored is provided.

## Description

This invention relates to an automatic dialing device for automatically carrying out dialing to a person on the other end of the line, and more particularly to a card type automatic dialing device with which a dialing function used for effecting payment of telephone call charge by making use of a card is combined.

Hitherto, telephone calls based on the card payment system by the so-called telephone card to effect payment of telephone call charge by using a card purchased in advance in accordance with the prepaid system and a credit card have been considerably popularized not only in Japan but also in other countries.

Let us now consider the case where a person makes a telephone call to Japan by using a card purchased in Japan and usable in foreign countries. In this case, it is required to continuously dial numbers of the order of about 30 digits including the ordinary international telephone number of about 14 digits in addition to the access point number of available area (about 11 digits), indicating language selected as voice information or assistance (about 1 digit), and ID (identification) number in a secret code form (about 8 to 10 digits) given to every card.

Inputting numeric values of about 30 digits by dialing operation in this way is very troublesome. This is the problem in making a telephone call by using the card.

This invention has been made in view of the above-described problems with the prior art, and its object is to provide a card type automatic dialing device constituted in a card form convenient for carrying, and capable of carrying out automatic dialing operation by sound (voice) output for a push-phone with respect to the fixed portion of numbers to be inputted in accordance with operation.

To achieve the above-described object, in accordance with this invention, there is provided a card type automatic dialing device in which a memory adapted so that predetermined numbers for automatic dialing including ID number relating to payment of telephone call charge are stored and the predetermined numbers can be read out by operation, and a means for outputting, as sound (voice), the predetermined numbers on the basis of memory content of the memory are provided within a card-shaped casing.

Further, payment of the telephone call charge can be supplementarily made by the credit card system as occasion demands in addition to the prepaid system. To realize this, a detachable externally attached memory in which credit number is stored is provided as the memory. Thus, a card type automatic dialing apparatus capable of additionally effecting post (future) payment by the credit card is provided.

In the accompanying drawings:
FIG. 1 is a view showing appearance of a first embodiment of a card type automatic dialing device according to this invention;
FIG. 2 is a block diagram showing an example of a circuit assembled into the device of the first embodiment of FIG. 1;
FIGS. 3a and 3b are explanatory views of ID number decoding preventing structures in the case where case is used and in the case where random number (table) is used, respectively;
FIG. 4 is a block diagram showing an example of a circuit assembled in a second embodiment of the automatic dialing device according to this invention;
FIG. 5 is an explanatory view showing various kinds of number data for international telephone call in the second embodiment;
FIG. 6 is a flowchart showing calling operation in the second embodiment; and
FIG. 7 is a flowchart showing updating operation of the number of units for telephone call in the second embodiment.

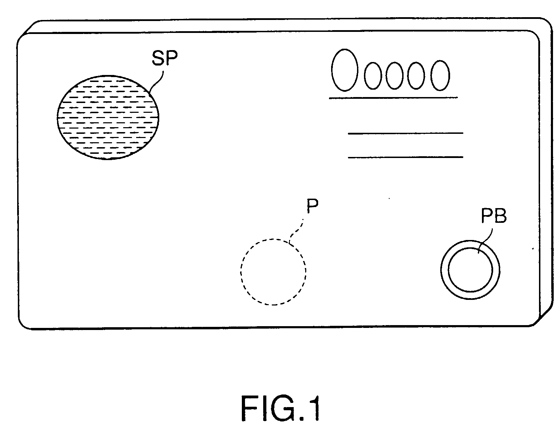

FIG. 1 shows the appearance of a first embodiment of this invention. As shown in FIG. 1, a card type automatic dialing device (hereinafter referred to as card dialer) of this invention includes a casing formed in a card form. A speaker SP and a push-button switch PB are provided on the surface of the casing in card form, and a battery P as a power supply and circuit elements driven by the battery P are assembled within the casing.

How to use this card dialer is as follows. The casing is held by the hand to depress the push-button switch PB to send sound produced from the speaker SP from the mouthpiece of the push-phone. The push-button PB is operated in order to read out the contents stored in the circuit elements included within the casing.

The number of operations corresponds to address. When the push-button PB is depressed, e.g., once, a predetermined number train, which is stored in the address 1, consisting of combination of a sequence of number data of the access number of the country at the other end of the line, number corresponding to the language selected as voice assistance, and ID number is read out. Subsequently, when the telephone number of the person on the other end of the line is dialed, connection to the person on the other end of the line is made. Thus, the telephone call can be made within the range of the prepaid fee where a call can be made in connection with the card dialer.

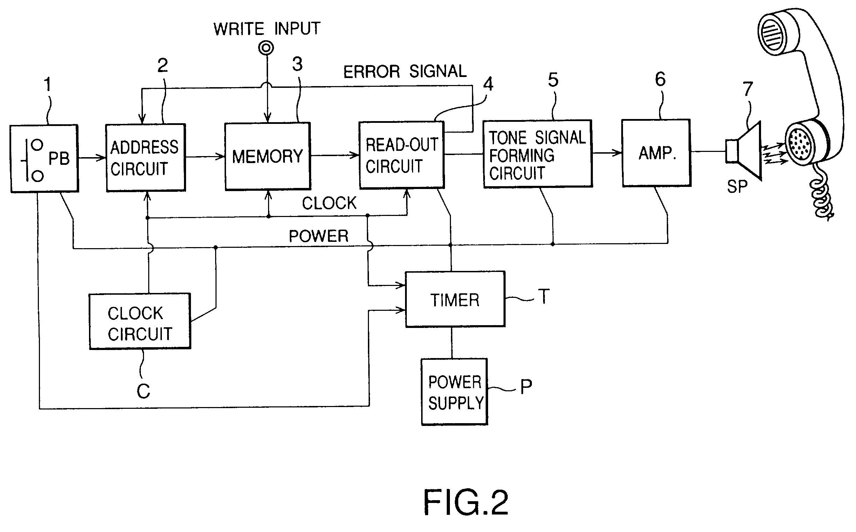

FIG. 2 is a block diagram showing a circuit accommodated within the card-shaped casing. As shown in FIG. 2, in the card dialer of this invention, an address that an address circuit 2 determines by an operation input by push-button switch 1 (corresponding to PB in FIG. 1) is delivered to a memory 3 to read out data of a predetermined number from the memory 3 to deliver the data thus read out to a tone signal forming circuit 5 through a read-out circuit 4 to form a speech signal to output sound from speaker 7 (corresponding to SP in FIG. 1) through an amplifier 6. In this instance, a clock circuit C outputs a clock signal to the address circuit 2, the memory 3 and the read-out circuit 4 to take synchronization of respective circuit elements. Moreover, in order to reduce dissipation of the power supply by the circuit operation, power is supplied only for a required time period by the operation of a timer T inserted at the output side of the power supply P.

As the memory 3, various rewritable non-volatile memories may be utilized. By exchange of payment of fee at the service station of the card issuance/management company, the memory content of the memory can be updated. This memory content is caused to undergo management by the computer also at the card issuance/management company side. Every time the automatic dialing device is used, whether or not calling can be made is confirmed while making reference to a predetermined number which has been read out.

A more practical operation will now be described.

Let us suppose the state where a person who has or possesses the card dialer of this invention makes a telephone call to Japan by using the push-phone of the public telephone in the U.S.A., for example. Initially, the hand-set is held by the hand to allow the speaker of the card dialer to become close to the mouthpiece to operate the push-button switch.

When the push-button switch 1 (PB) is depressed, e.g., once, a single signal in pulse form is delivered from the push-button switch 1 to the address circuit 2. Thus, the address circuit 2 delivers an address signal which designates "address 1" with respect to the memory 3. Responding to this, the memory 3 outputs, to the read-out circuit 4, a series of numbers, i.e., access number of the country at the other end of the line, a number corresponding to the language selected as voice assistance, and an ID number, which are stored at the address 1.

The read-out circuit 4 detects on the basis of the above output whether or not there is any error of data which has been read out from the memory 3. If there is any error, the read-out circuit 4 delivers an error signal to the address circuit 2 to allow it to read out the memory content of the address 1 of the memory 3 for a second time. In contrast, if there is no error, the read-out circuit 4 delivers the data thus read out to the tone signal forming circuit 5. The tone signal forming circuit 5 sequentially forms, from the data thus read out, a speech signal, i.e., frequency signal for every number to deliver it to the speaker 7 through the amplifier 6 to allow it to output sound.

This sound output is sent to the data management computer of the card issuance/management company through the telephone line from the push-phone. The prepaid fee data for every card dialer are recorded in the computer with the ID numbers being as reference. Every time the card dialer is used, reference to data corresponding thereto is made. Thus, various data processing including processing of whether or not calling can be made are all carried out.

On the other hand, when the push-button switch 1 is depressed once, the timer T is started in response to rising of that signal. Thus, power supply is started from the power supply P to the clock circuit C, the read-out circuit 4, the tone signal forming circuit 5 and the amplifier 6. The power supply duration time corresponds to the time required until data is read out and the data thus read out has been outputted as sound, and is set to a time obtained by counting, e.g., the number of pulses of the clock signal by a predetermined number.

### Management of the ID No.

As described above, in the case where the card dialer is used while moving within the same area, e.g., within the same country, if the push-button switch is depressed once, reference to related data is made at all times. For this reason, it is possible to carry out the telephone call as long as there exists the remaining amount of calling fee recorded in the computer of the card issuance/management company.

On the contrary, let suppose the case where a calling person moves from the U.S.A. to Canada. Since the access number is different from the above case, it is required to effect payment of the calling charge corresponding thereto in advance to write the reference number based thereon into, e.g., "address 2" of the memory of the card dialer to read out. In this case, when the push-button switch 1 is depressed, e.g., twice to input two signals in pulse form to the address circuit 2, data relating to Canada is read out from the memory 3. This data is collated with data of the card issuance/management company. Thus, the user can carry out a telephone call using the card dialer similarly in the case of calling in the U.S.A.

As the utilization mode of the card dialer, there exist not only the case where a Japanese goes to the foreign country with the prepaid card purchased in Japan, but also the case where any one of Japanese and foreigner carries out international telephone call by the prepaid card purchased in Japan or foreign countries. This invention can be applied to either case.

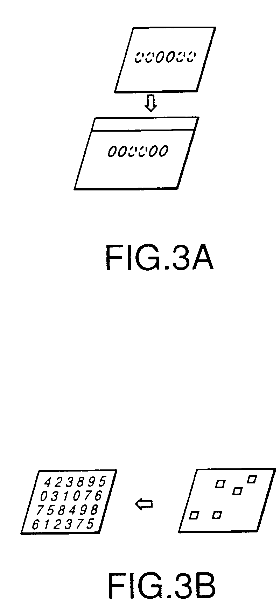

FIGS. 3a and b show examples of the card dialer in which the ID number decoding preventing structure is employed. It should be noted that since the ID number in this case corresponds to a telephone set other than a push-phone, this ID number indicates the ID number in the case where the ID number is indicated on the external surface of the card dialer to carry out dialing operation while looking at the indicated number.

The card dialer of FIG. 3(a) is of a structure in which ID number portions are separately recorded at random on the card-shaped automatic dialing device side and the side of a case for accommodating the automatic dialing device so that the ID number cannot be recognized until both ID number portions are caused to precisely undergo positioning.

In addition, the card dialer of FIG. 3b is of a structure in which figures are arranged in random number form on the surface of the automatic dialing device in the card form, whereby when a reading card with a window in sheet form is caused to precisely undergo positioning thereonto, user can read the ID number through the window.

By such ID number decoding preventing function, it can be prevented to a considerable degree that an unauthorized telephone call utilizing the ID number word without promise is made by a person who has not effected payment in advance and does not have the card dialer.

### Case of a telephone set other than push-phone

Since the telephone set of the so-called dialing line cannot carry out dialing by sound input as in the case of the push-phone, it is necessary to carry out inputting of numbers manually. To realize this, ordinary international telephone numbers of about 14 digits are inputted manually in succession in addition to the access number of the available area (11 digits), the number indicating the language selected as voice assistance, and ID number (8 to 10 digits) given to every card dialer.

Also in this case, the computer of the card issuance/management company carries out data management with the ID numbers being as reference to similarly conduct management of the calling charge.

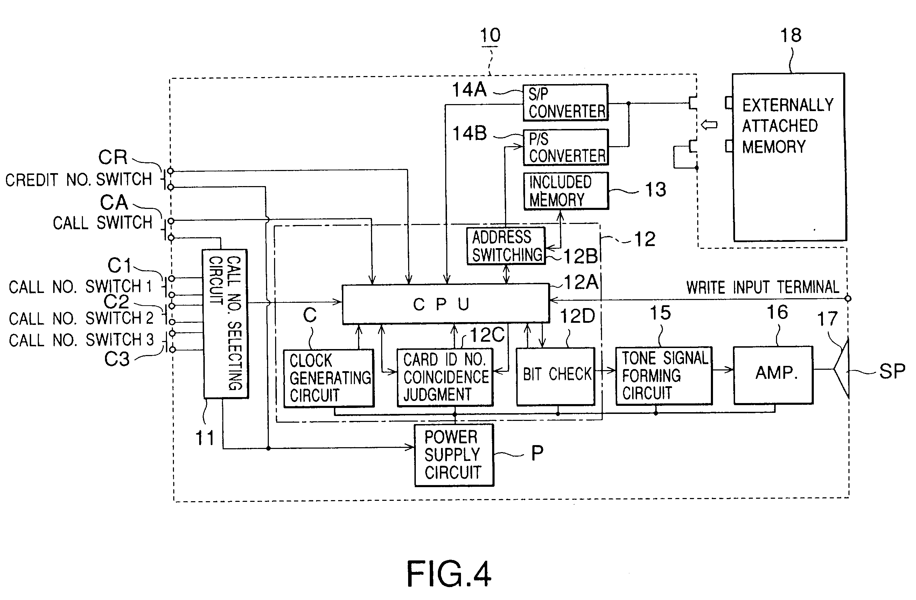

FIG. 4 shows the configuration of a second embodiment of this invention. This embodiment is characterized, as compared to the embodiment of FIG. 1, in that, from a viewpoint of the appearance, expansion is made such that three kinds of five push-button switches for operation are provided, and a memory of a structure separable from the card dialer body is provided. The second embodiment is characterized in that there is employed configuration by microcomputer as the internal structure. It is to be noted that the kind and the number of push-button switches are not limited to those shown.

When viewed from a functional point of view, payment of the calling fee can be supplementarily made by the credit card system as occasion demands in addition to payment by the prepaid system. To realize this, a detachable externally attached memory in which the credit card number (hereinafter simply referred to as credit number) is stored is provided as the memory, thus making it possible to additionally effect future payment by the credit card on the basis of data caused to undergo management by the card issuance/management company.

Namely, the portion encompassed by broken lines in FIG. 4 is a card dialer body 10, and an externally attached memory 18 is combined with the card dialer body 10. On the external surface of the card dialer body 10, there are provided three call number switches including call number switches C1, C2, C3 for selecting access points, a call switch CA for sending out calling instruction of the access point selected by any one of these call number switches, and a credit number switch CR for sending out the credit number.

These respective switches are connected to at least one of a call number selecting circuit 11 and a CPU 12A in a microcomputer 12 indicated by single dotted lines, and are used for an operation of psuedo automatic dialing and an operation to send out number data for payment of charge.

Within the card dialer body 10, an included memory 13 adapted for carrying out writing/reading of number data for payment of fee in cooperation with the microcomputer 12 is provided. Card ID number is stored in the included memory 13.

Moreover, within the card dialer body 10, a tone signal forming circuit 15, an amplifier 16, and a speaker 17 are provided similarly to the configuration of FIG. 1 in addition to the call number selecting circuit 11 and the CPU 12. Thus, dialing can be carried out from the mouthpiece by sound output from the speaker 17.

On the other hand, credit and card ID numbers to be identical to those stored in the included memory 13 are stored in the externally attached memory 18 of the structure separable from the card dialer body 10. The externally attached memory 18 is connected to the card dialer body by means of a two-terminal type connector. In order to carry out read and write operations of stored data of the externally attached memory 18, a serial/parallel (S/P) converting circuit 14A, a parallel/serial (P/S) converting circuit 14B, and an address switching circuit 12B are provided. The address switching circuit 12B serves to carry out, in a switching manner, writing of data into the included memory 13 and read-out therefrom, and writing of data into the externally attached memory 18. Further, writing of data into the included memory 13 and reading out of data therefrom are carried out through the address switching circuit 12B. on the other hand, with respect to the externally attached memory 18, writing is carried out through the address switching circuit 12B, whereas read-out operation is directly carried out by the CPU 12A without allowing other circuits to intervene.

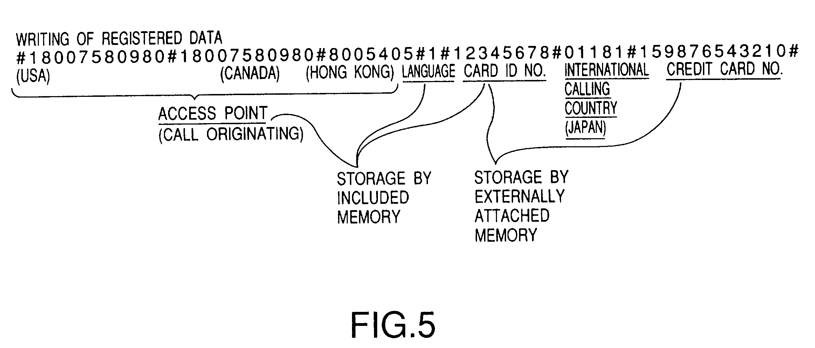

FIG. 5 shows the data content when data stored in the included memory 13 of the card dialer body 10 and the externally attached memory 18 are read out. This data content includes five kinds of data in which data from the write input terminal are registered when purchasing the card dialer. They are access points (three areas of U.S.A., Canada and Hong Kong in this case), used language, card ID number, international calling country number and credit number. Respective numbers are partitioned by #, and can be arbitrarily selectively read out with the portion between # being as one unit.

In order to carry out telephone call, access point, used language, card ID and international calling country numbers are read out from the card dialer body 10, and area code and telephone number are added subsequently thereto by the operation of the ten key of the telephone. In this case, the area code and the telephone number may be written in advance into the card dialer body 10. The credit number stored in the externally attached memory 18 is used for effecting payment of additional charge in the case of carrying out calling of which charge is above the prepaid charge by the prepaid card, and is outputted by sound toward the telephone mouthpiece on the basis of operation corresponding to inquiry from the telephone.

The access point is the number indicating the area in which international call is dispatched by using the card dialer. In the case of FIG. 5, there are three areas of U.S.A., Canada and Hong Kong. The language is represented by "1" indicating the Japanese, the card ID number is figures of about eight digits, and the international calling country is represented by figures of about 5 digits. If the international calling country is Japan, "01181" is indicated. The credit number consists of figures of 12 digits in total including the leading code of 2 digits that respective credit card issuance/management companies have.

In this card dialer, the call number selecting circuit 11 delivers operation commands to the power supply circuit P by the operation of the call number switch C1, C2 or C3, or the call switch CA, thus to allow respective circuits within the card dialer body 10 to be operative. Namely, these respective switches C1, C2, C3 and CA double as a starting operation switch.

In this card dialer, an input by the call number switches C1, C2 or C3 is delivered to the CPU 12A through the call number selecting circuit 11, and is further delivered to the CPU 12A. Thus, the access point corresponding to the call number is read out from the included memory 13 and is outputted as sound. Then, used language data and card ID number data are also successively read out and are outputted as sound. In this read-out operation, error correction is implemented to an output of the CPU 12A by a bit checking circuit 12D. The error corrected signal thus obtained is delivered to the speaker 17 through the tone signal forming circuit 15 and the amplifier 16, and is outputted as sound. Thereafter, when area code and terminal number are inputted from the ten key of the telephone, the line is connected. Thus, the telephone call is carried out.

There are instances where after the telephone call is started, the telephone call is carried out in the state above the range of payment fee by the prepaid card. In this case, responding to inquiry from the card issuance/management company through the telephone, processing for making settlement of accounts by the credit card is carried out. In this instance, the externally attached memory 18 is used.

Namely, when a person who is carrying out the telephone call allows the credit number switch CR to be turned on in the state where the card dialer body 10 into which the externally attached memory 18 is attached is in contact with the mouthpiece of the telephone, the CPU 12A reads out the credit number and the card ID number from the externally attached memory 18 to deliver the card ID number from the externally attached memory 18 and the card ID number which has been already read out to register (not shown) within the CPU 12A to a card ID number coincidence judging circuit 12C to compare them with each other. When both numbers coincide with each other, the credit number is outputted as sound through the bit check circuit 12D, the tone signal forming circuit 15 and the amplifier 16. This credit number is sent to the card issuance/management company and is used for balancing additional charge.

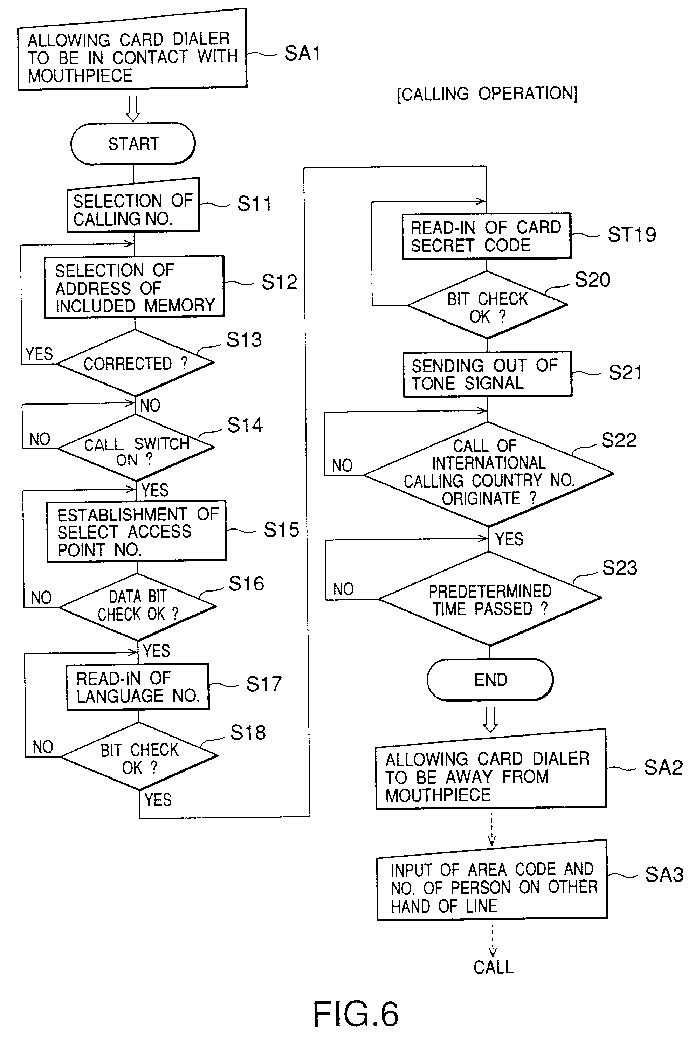

FIG. 6 is a flowchart showing the pseudo automatic dialing operation using the card dialer of the embodiment of FIG. 4. Also in this case, explanation will be given under the state where a user makes a telephone call from a public telephone of the U.S.A. toward the Japan similarly to the previously described example. In this card dialer, U.S.A. is included as one of the access points as explained with reference to FIG. 5. Accordingly, at step SA1, when the card dialer is caused to be in contact with the mouthpiece of the public telephone to allow any one of call number switches C1 to C3 and the call switch CA to be turned on, an operation command is delivered from the call number selecting circuit 11 to the power supply circuit P. Thus, respective circuits within the card dialer body 10 are placed in operative state. Ordinarily, any one of the call number switches C1 to C3 is operated, and the call switch CA is then turned on. Thus, the call number selecting circuit 11 operates (starts) the power supply circuit P.

After the circuit operation is started, the CPU 12A selects calling number in accordance with a signal from the call number selecting circuit 11 (step S11). Desired address is selected from the included memory 13 in dependency upon such selection to read out 1 of three access points (step S12). By suitably depressing any one of calling number switches C1, C2, C3 for a sending time, it is possible to correct the calling number (step 13).

If a desired access point number is determined (step S14), the call switch CA is depressed so that establishment thereof is made (step S15). Then, data bit checking is carried out by the bit checking circuit 12D (step S16). When there is any error, the processing operation returns to the step S15 to read in the access point number for a second time. On the other hand, if there is no error, the next language number is read in (step S17).

If there is any error as the result of the bit checking of the language number, the processing operation returns to the step S17 for a second time to read in the language number. In contrast, if there is no error, read-in operation of the card ID number is carried out at step S19 to further carry out bit check (step S20) to carry out sending out of the tone signal by step S21.

The operation for sending out various signals using data stored in the card dialer has been described above. Then, at step S22, whether or not call originating of the international calling country number using the ten key of the telephone is confirmed with respect to inquiry from the card issuance/management company. If the ten key operation is carried out, the processing operation shifts to step S23 to confirm that a predetermined time necessary for the line connecting operation is passed thereafter to allow the CPU 12A to turn off the power supply circuit within the dialer to complete the operation of the card dialer (end).

Thereafter, the card dialer is caused to become away from the mouthpiece of the telephone at step SA2 to input in succession area code and terminal number from the ten key of the telephone, whereby the line connection for the international call is carried out so that calling can be made.

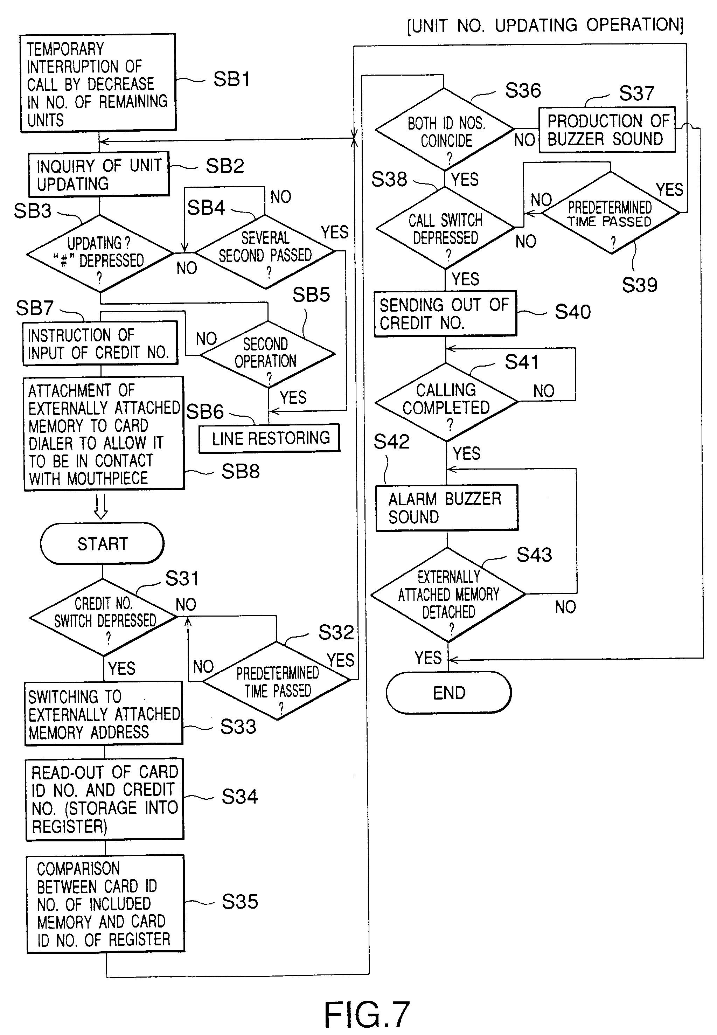

FIG. 7 is a flowchart for explaining the operation of a continuous call by the card dialer subsequent to the telephone call which has been described with reference to FIG. 6. Such circumstances take place as a temporary interruption of calling that the card issuance/management company carries out by decrease of the number of remaining units of the card dialer at step SB1. Then, the card issuance/management company carries out inquiry of unit updating at step SB2. Responding to this, a caller depresses # in the ten key of the telephone to thereby make a declaration of intention of call elongation. If not so, the caller has no intention of call elongation (step SB3). In the case where call elongation is not carried out, the line state is restored so that calling is carried out within the range of the number of remaining units of the card dialer being used (step SB6).

In the case of call elongation, whether or not the operation by the step SB5 is the second operation is judged. As the result of the judgment, when it is not the second operation, voice instruction is given by step SB8 so that "please attach the externally attached memory to the card dialer thereafter allow it to be in contact with the mouthpiece of the telephone". Thus, the operation by the card dialer is required.

As seen from the operation which has been described with reference to FIG. 6, when the call number switches C1, C2, C3 and the call switch CA of the card dialer are suitably depressed, command indicative of power on is issued from the call number selecting circuit 11 to the power supply circuit P. Thus, the operation of the circuit is started.

Then, whether or not the credit number switch CR of the card dialer is depressed is judged (step S31). If the credit number switch CR is not depressed, whether or not a predetermined time is passed is judged (step S32). In the case where the subsequent state where there is no sound output is passed for a predetermined time, the processing operation returns to the step SB2. Thus, re-inquiry of unit updating is carried out. In the case where response with respect thereto is such that ten key "#" of the telephone is not depressed for several seconds (step SB4), or is depressed for the second time (step SB5), it is possible to carry out calling within the range of the remaining number of calling operations from the step SB6 where line connection is restored.

On the other hand, when the credit number switch CR is depressed, the CPU 12A carries out switching to the externally attached memory address (step S33) to read out the card ID and the credit numbers from the externally attached memory 18 (step S34). The card ID number of the data thus read out is compared with the card ID number which has been already read to register (not shown) of the CPU 12A from the included memory 13 (step S35). The result of the comparison is judged at step S36. If both numbers are in correspondence with each other as the result of the fact that normal externally attached memory 18 is attached into the card dialer body 10, the processing operation shifts to step S38.

On the contrary, when both ID numbers are not in correspondence with each other because the externally attached memory 18 is not correct, a buzzer sound is outputted from the speaker 17 (FIG. 5) by the step S37. Thereafter, the circuit power supply is turned off. Thus, the operation is completed.

When the processing operation shifts to step 38 in the case where both card ID numbers are in correspondence with each other, whether or not the call switch CA is depressed is judged. When it is judged that by the step S38 the calling switch CA is not depressed, the processing operation returns to the step SB2 after a predetermined time is passed. Thus, inquiry of unit updating is carried out for a second time.

When the call switch CA is depressed, an output is delivered from the CPU 12A to the tone signal forming circuit 15 through the bit checking circuit 12D by step S40. Thus, credit number is outputted as sound toward the mouthpiece of the telephone by the speaker SP through the amplifier 16.

When completion of calling of the credit number by sound output is recognized by step S41, the CPU 12A allows the speaker 17 to output the alarm buzzer sound therefrom by step S42. Responding to this, whether or not the externally attached memory is detached from the card dialer body 10 is judged by step S43. Until the externally attached memory is detached, the alarm buzzer sound is produced, thus paying attention to the user. This is implemented by taking into consideration the fact that if the card dialer in the state where the externally attached memory is attached is lost or stolen, there is the possibility that card calling may be unrestrictedly carried out by the finder, etc.

When the externally attached memory is detached, the operation of the card dialer is completed. Then, the card dialer is detached from the mouthpiece of the telephone to continue the telephone call.

As described above, in accordance with this invention, memory in which predetermined numbers for automatic dialing including ID number relating to payment of calling fee is stored and the predetermined numbers can be read out by operation, and means for outputting, as sound, the predetermined numbers on the basis of the memory content of the memory are provided within the card-shaped casing to comprise the card dialer. Accordingly, psuedo automatic dialing in which dialing of telephone numbers which requires input of many numbers as in the case of a telephone from the foreign country is partially automatized can be realized, thus making it possible to simplify the dialing work to much degree. In addition, since the automatic dialing device itself is constituted in card form, it is extremely convenient for carrying.

Moreover, when the number of remaining units by the card dialer is decreased, it is possible to carry out call prolongation of the credit card balancing system by making use of the credit number data stored in the externally attached memory. Accordingly, even in an emergency state where a user cannot purchase the card dialer, it is possible to continuously carry out international calling by the card dialer. Further, there is employed the configuration in which credit and card ID number data are stored in the externally attached memory to allow the card ID data of the card dialer body and the card ID number data of the externally attached memory to be collated with each other when the externally attached memory is combined with the dialer body. For this reason, it is impossible to carry out a telephone call unless the card dialer body and the externally attached memory are in correspondence with each other. Accordingly, it is possible to prevent international calling by an unauthorized user of the card dialer body or the externally attached memory, etc.

## Claims

1. A card type automatic dialing device comprising:
a memory in which at least one predetermined number including ID number relating to payment of calling fee is stored;
a switch which forms a signal for reading out any predetermined number in the memory in accordance with operation;
an address circuit for delivering an address signal to the memory in accordance with a signal from the switch;
a read-out circuit for carrying out bit error detection of number data read out from the memory in accordance with the address signal from the address circuit, whereby when there is no error, the read-out circuit outputs the number data read out therefrom, while when there is any error, the read-out circuit allows the memory to carry out read-out operation therefrom;
means supplied with a number output signal from the read-out circuit to output sound for inputting as sound to a telephone; and
a casing formed so as to take a card shape and adapted for the respective components therewithin.

2. A card type automatic dialing device as set forth in claim 1,
wherein the predetermined number includes access number of a country at the other end of the line, number corresponding to the language selected as voice guidance, card ID number, and international calling country number.

3. A card type automatic dialing device as set forth in claim 1,
wherein the predetermined number is indicated in a secret code form on the external surface of the casing.

4. A card type automatic dialing device as set forth in claim 3,
wherein the predetermined number is indicated so that it can be read when the casing external surface and a case for accommodating the casing therewithin are combined with each other.

5. A card type automatic dialing device as set forth in claim 3,
wherein the predetermined number is indicated on the external surface of the casing so that it appears when the casing and a predetermined random number table are combined with each other.

6. A card type automatic dialing device comprising:
a casing formed so as to take a card shape;
an included memory accommodated within the casing and adapted so that at least one predetermined number including ID number relating to payment of calling fee, call originating area code, language number, and peculiar number every card is rewritably stored;
an externally attached memory constituted so that it can be retained in the state separate from the casing, and adapted so that a credit card number and the ID number relating to the payment of calling fee are rewritably stored, whereby when the externally attached memory is connected to the card type automatic dialing device, it carries out write operation of data and read operation of data;
a first switch provided on the casing surface and adapted to form a signal for reading out any predetermined number in the included memory in accordance with operation;
a second switch provided on the casing surface and adapted to read out stored data of the externally attached memory;
an address circuit provided within the casing and adapted for delivering an address signal to the included memory and the externally attached memory in accordance with signals from the first and second switches;
a read-out circuit provided within the casing and adapted for carrying out bit error detection of number data which have been read out from the included memory and the externally attached memory in accordance with the address signal from the address circuit, whereby when there is no error, the read-out circuit outputs the number which has been read out, while when there is any error, the read-out circuit allows the memory to carry out read-out operation therefrom for a second time; and
means provided on the casing surface and supplied with a number output signal from the read-out circuit to output sound for inputting as sound to a telephone.

7. A card type automatic dialing device as set forth in claim 6,
wherein the predetermined number further includes access number of a country at the other end of the line, number corresponding to language selected as voice guidance, card ID number, and international calling country number.

8. A card type automatic dialing device as set forth in claim 6,
wherein the predetermined number is indicated in a secret code form on the external surface of the casing.

9. A card type automatic dialing device as set forth in claim 6,
Wherein the predetermined number is indicated so that it can be read when the casing external surface and a case for accommodating the casing therewithin are combined with each other.

10. A card type automatic dialing device as set forth in claim 6,
wherein the predetermined number is indicated on the external surface of the casing so that it appears when the casing and a predetermined random number table are combined with each other.
